# EUROPEAN PATENT APPLICATION

(11) **EP 4 848 852 A1**
(43) Date of publication of application: **02.12.2026**
(21) Application number: 24919278.2
(22) Date of filing: 24.01.2024
(51) Int. Cl.: H04W 72/0446

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Mewburn Ellis LLP
(86) International application number: PCT/CN2024/073880
(87) International publication number: WO 2025/156163

(57) **Abstract**

A method for wireless communication and a communication device are provided. The method includes the following. A first station (STA) transmits a first frame via a first sub-channel in a first channel, where the first channel includes multiple sub-channels, and the first sub-channel is one of the multiple sub-channels.

## Description

### TECHNICAL FIELD

This disclosure relates to the field of communication technology, in particular to a method for wireless communication and a communication device.

### BACKGROUND

In a wireless fidelity (WiFi) system, it is sometimes necessary to perform channel access for a large number of stations (STAs) in a very short time. For example, a few hundred or even a few thousand of ambient power (AMP) devices may be associated with the same access point (AP). In such a scenario, the AP may be required to poll these AMP devices in a very short time, and thus massive channel access for the AMP devices is needed. Therefore, how to improve channel capacity to support massive channel access for STAs is an issue to be addressed.

### SUMMARY

A method for wireless communication and a communication device are provided in the disclosure. Various aspects involved in the disclosure are described below.

In a first aspect, a method for wireless communication is provided. The method includes the following. A first station (STA) transmits a first frame via a first sub-channel in a first channel, where the first channel includes multiple sub-channels, and the first sub-channel is one of the multiple sub-channels.

In a second aspect, a method for wireless communication is provided. The method includes the following. An access point (AP) receives a first frame transmitted by a first station (STA) via a first sub-channel in a first channel, where the first channel includes multiple sub-channels, and the first sub-channel is one of the multiple sub-channels.

In a third aspect, a communication device is provided. The communication device is a first STA, and the communication device includes a first communication module. The first communication module is configured to transmit a first frame via a first sub-channel in a first channel, where the first channel includes multiple sub-channels, and the first sub-channel is one of the multiple sub-channels.

In a fourth aspect, a communication device is provided. The communication device is an AP, and the communication device includes a first communication module. The first communication module is configured to receive a first frame transmitted by a first STA via a first sub-channel in a first channel, where the first channel includes multiple sub-channels, and the first sub-channel is one of the multiple sub-channels.

In a fifth aspect, a communication device is provided. The communication device includes a memory and a processor. The memory is configured to store a program. The processor is configured to execute the program stored in the memory, to perform the method of any one of the above aspects.

In a sixth aspect, a communication system is provided in embodiments of the disclosure. The communication system includes the communication device mentioned above. In another possible design, the communication system may further include other devices that interact with the communication device in the solutions provided in embodiments of the disclosure.

In a seventh aspect, a computer-readable storage medium is provided in embodiments of the disclosure. The computer-readable storage medium stores a computer program operable with a communication device to perform part or all of operations of the method of any one of the above aspects.

In an eighth aspect, a computer program product is provided in embodiments of the disclosure. The computer program product includes a non-transitory computer-readable storage medium storing a computer program, and the computer program is operable with a communication device to perform part or all of operations of the method of any one of the above aspects. In some implementations, the computer program product may be a software installation package.

In a ninth aspect, a chip is provided in embodiments of the disclosure. The chip includes a memory and a processor. The processor can invoke and execute a computer program stored in the memory to implement part or all of operations of the method of any one of the above aspects.

In embodiments of the disclosure, a channel is split into multiple sub-channels, such that a station (STA) can operate on a sub-channel. In this way, one channel can accommodate or be accessed by more STAs simultaneously, thereby improving channel capacity.

### BRIEF DESCRIPTION OF THE DRAWINGS

FIG. 1 is a schematic diagram of a wireless communication system to which embodiments of the disclosure are applicable.
FIG. 2 is an exemplary structural diagram of an AMP device.
FIG. 3 is an exemplary structural diagram of an energy harvesting module in FIG. 2.
FIG. 4 is a schematic diagram illustrating a backscatter communication process of an AMP device.
FIG. 5 is an exemplary diagram illustrating an encoding scheme for an AMP device.
FIG. 6 is an exemplary diagram illustrating a channel splitting scheme provided in embodiments of the disclosure.
FIG. 7 is a schematic flowchart illustrating a method for wireless communication provided in embodiments of the disclosure.
FIG. 8 is another exemplary diagram illustrating a channel splitting scheme provided in embodiments of the disclosure.
FIG. 9 is yet another exemplary diagram illustrating a channel splitting scheme provided in embodiments of the disclosure.
FIG. 10 is yet another exemplary diagram illustrating a channel splitting scheme provided in embodiments of the disclosure.
FIG. 11 is yet another exemplary diagram illustrating a channel splitting scheme provided in embodiments of the disclosure.
FIG. 12 is yet another exemplary diagram illustrating a channel splitting scheme provided in embodiments of the disclosure.
FIG. 13 is yet another exemplary diagram illustrating a channel splitting scheme provided in embodiments of the disclosure.
FIG. 14 is a schematic structural diagram of a communication device provided in an embodiment of the disclosure.
FIG. 15 is a schematic structural diagram of a communication device provided in another embodiment of the disclosure.
FIG. 16 is a schematic structural diagram of an apparatus to which embodiments of the disclosure are applicable.

### DETAILED DESCRIPTION

The following will describe technical solutions of the disclosure with reference to the accompanying drawings.

### Communication System

The technical solutions of embodiments of the disclosure are applicable to various communication systems, such as wireless local area networks (WLAN), wireless fidelity (WiFi), or other communication systems.

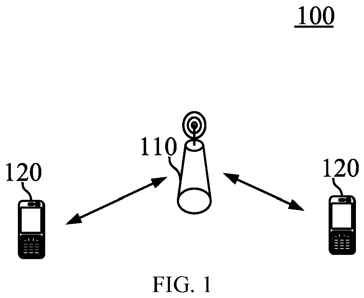

FIG. 1 illustrates a wireless communication system 100 to which embodiments of the disclosure are applicable. The wireless communication system 100 may include an access point (AP) 110 and a station (STA) 120 that accesses a network through the AP 110.

In some scenarios, an AP may be referred to as "AP STA". That is, an AP is also an STA in a sense.

In some scenarios, an STA may be referred to as "non-AP STA".

Communication in the communication system 100 may be communication between an AP and an STA, communication between an STA and an STA, or communication between an STA and a peer STA. The peer STA may refer to a device at a peer side that communicates with the STA, for example, the peer STA may be an AP or an STA.

The AP serves as a bridge connecting a wired network and a wireless network. Its main function is to connect various wireless network clients together, and then connect the wireless network to Ethernet. The AP device may be a terminal device (such as a mobile phone) or a network device (such as a router) that is equipped with a wireless fidelity (WiFi) chip.

It can be understood that, roles of various communication devices in the communication system 100 are not absolute. A mobile phone is taken as an example. In a scenario where the mobile phone is connected to a router, the mobile phone is an STA. In a scenario where the mobile phone serves as a hotspot for other mobile phones, the mobile phone acts as an AP.

The AP and the STA may be devices used in the Internet of Vehicles, such as internet of things (IoT) nodes, sensors, etc., in the IoT, smart cameras, smart remote controllers, smart water meters, etc., in a smart home, sensors in a smart city, etc.

In some embodiments, both the STA and the AP may support the 802.11 standards. The STA or the AP may also support various current and future WLAN standards of the 802.11 family, such as 802.11 ax, 802.11 ac, 802.11 n, 802.11 g, 802.11 b, 802.11 a, etc.

There is one or more links between an STA and an AP. In some embodiments, both the STA and the AP support multi-band communication, for example, simultaneous communication on frequency bands such as 2.4 GHZ, 5 GHZ, 6 GHZ, 45 GHz, and 60 GHz, or simultaneous communication on different channels of the same frequency band (or different frequency bands), to improve communication throughput and/or reliability between devices. Such devices are generally referred to as "multi-band devices" or "multi-link devices (MLDs)", and sometimes are also referred to as "multi-link entities" or "multi-band entities". A multi-link device may be an AP device or an STA device. If the multi-link device is an AP device, the multi-link device includes one or more APs. If the multi-link device is an STA device, the multi-link device includes one or more non-AP STAs.

A multi-link device that includes one or more APs may be referred to as "access point multi-link device (AP MLD)", and a multi-link device that includes one or more non-AP STAs may be referred to as "non-access point multi-link device (non-AP MLD)".

In embodiments of the disclosure, the AP may include multiple APs, and the non-AP STA may include multiple STAs. Multiple links can be formed between the multiple APs and the multiple STAs, and data communication can be performed between the multiple APs and the multiple STAs by using corresponding links.

In embodiments of the disclosure, the STA may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, etc., that supports WLAN/WiFi technology.

The frequency bands supported by the WLAN technology may include, but are not limited to, low frequency bands (e.g., 2.4 GHz, 5 GHZ, 6 GHZ), high frequency bands (e.g., 45 GHz, 60 GHz).

FIG. 1 exemplarily illustrates one AP and two STAs. Optionally, the communication system 100 may include multiple APs and another number of STAs, which is not limited in embodiments of the disclosure. As illustrated in FIG. 1, an AP, an STA 120a, and an STA 120b may be located in the same basic service set (BSS). The AP may be associated with the STA 120a. The AP may be associated with the STA 120b.

It can be understood that, in embodiments of the disclosure, a device having a communication function in the network/system may be referred to as "communication device". Taking the communication system 100 as illustrated in FIG. 1 as an example, the communication device may include an AP 110 and an STA 120 that have a communication function. In addition, the communication device mentioned in embodiments of the disclosure may also include other devices in the communication system 100, such as a network controller, a gateway, and other network entities (not illustrated in FIG. 1), which are not limited in embodiment of the disclosure.

The AP and the STA may be deployed on land, which includes indoor or outdoor, handheld, wearable, or in-vehicle, may be deployed on water, or may be deployed in aircraft, balloons, or satellites in the air. In embodiments of the disclosure, the scenario in which the AP and the STA are located is not limited.

It may be understood that, all or some of functions of the communication device in the disclosure may also be implemented by software functions running on hardware, or by virtualization functions implemented on a platform (e.g., a cloud platform).

### Channel Access and Wake-up Radio (WUR) Technology

Channel access is based on a listen before talk (LBT) principle in WiFi, and multiple channel access schemes have been proposed in the related art (e.g., Mustafa Ergen, "IEEE 802.11 Tutorial," Jun. 2002)

Wake up signal (WUS) technology has been introduced in 802.11ba. Since the processing capability of WUR devices is restricted, when the WUR devices operate at 2.4 GHz, the WUR devices can transmit a legacy preamble with bandwidth 20 MHz and then transmit a WUR frame with 4 MHz bandwidth on a channel. For an introduction to WUR technology, reference may be made to, for example, "Steve Shellhammer, Alfred Asterjadhi, and Yanjun Sun, IEEE 802.11ba Ultra-Low Power Wake-up Radio Standard, Wiley 2022". Further, to enhance the capability of an AP to address as many non-AP WUR STAs as possible in one go, frequency division multiple access (FDMA) technology is proposed. In FDMA technology, *N (N* is an integer greater than 1) 20 MHz channels are used simultaneously, and thus N times non-AP WUR STAs can be addressed by the AP.

### Ambient Power (AMP) Device

With the development of wireless communication technologies, there is a desire to integrate wireless communication systems with various vertical industries such as logistics, manufacturing, transportation, and energy. For example, wireless communication systems can be integrated with industrial wireless sensor networks (IWSNS). For another example, wireless communication systems can be integrated with smart logistics and smart warehousing. For another example, wireless communication systems can be integrated with smart home networks.

However, in these industries, a communication device typically needs to have characteristics such as relatively low cost, relatively small size (e.g., ultra-thin), maintenance-free, long service life, etc. Therefore, to meet these requirements, zero-power communication technology can be used for communication. In such a scenario, the STA 120 mentioned above may be referred to as "zero-power device" or "AMP device".

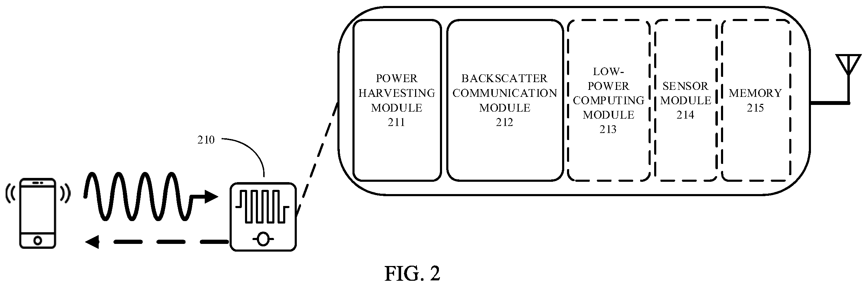

The zero-power communication technology and the AMP device are introduced below with reference to FIG. 2.

As illustrated in FIG. 2, an AMP device 210 that supports zero-power communication technology may include a power harvesting module 211 and a backscatter communication module 212. In some cases, the AMP device 210 may further include a low-power computing module 213. The low-power computing module 213 can be configured to provide a computing function, such as data processing, for the AMP device 210. In some other cases, the AMP device 210 may further include a sensor 214 configured to collect external information (e.g., ambient temperature, ambient humidity, etc.). In some other cases, the AMP device 210 may further include a memory 215 configured to store some information (such as external information harvested by the sensor, an object identifier, etc.).

The power harvesting module 212 is configured to perform power harvesting. In some implementations, power may be harvested from a power-supply signal transmitted by another device or from the external environment. The power-supply signal may be a "radio frequency (RF) signal" transmitted by a network device. Therefore, the power harvesting module may be referred to as "RF power harvesting module".

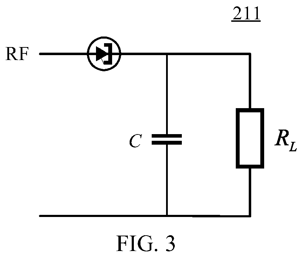

FIG. 3 illustrates a possible structure of a power harvesting module. As illustrated in FIG. 3, the power harvesting module 211 can harvest power of spatial electromagnetic waves of an RF signal based on the principle of electromagnetic induction and store harvested power in a capacitor C, which is a process of charging the capacitor C. After the process of charging the capacitor C is completed, the capacitor C may start discharging, to power the AMP device. For example, the discharging of the capacitor C may be used to drive the AMP device to perform low-power demodulation on data transmitted by another device. For another example, the discharging of the capacitor C may be used to drive the AMP device to modulate data to be transmitted. For another example, the discharging of the capacitor C may be used to drive a sensor of the AMP device to collect data. For another example, the discharging of the capacitor C may be used to drive the AMP device to read data in the memory 215, etc.

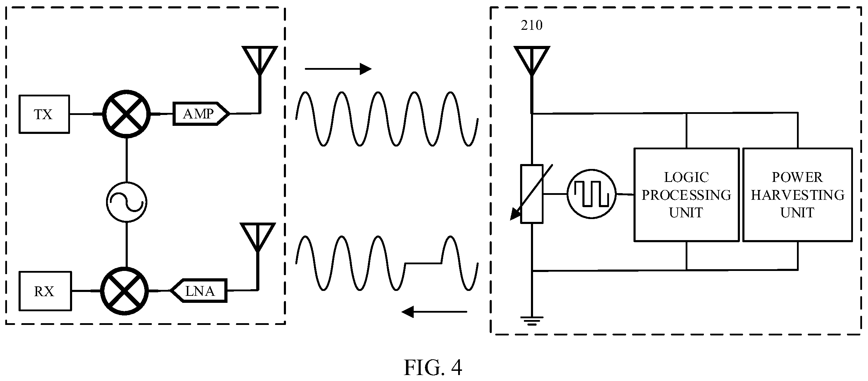

A principle of backscatter communication is introduced below with reference to FIG. 4. Reference may be made to FIG. 4, the AMP device 210 receives a radio signal transmitted by another device and modulates the radio signal to load data to be transmitted. Then, the AMP device 210 radiates the modulated signal by using an antenna. This information transmission process is referred to as "backscatter communication". The radio signal may also be referred to as "carrier signal". The carrier signal may be a radio signal that is not modulated. The carrier signal may be, for example, a sine wave signal. Backscatter communication and a load modulation function are inseparable. The load modulation function can be understood as adjusting and controlling circuit parameters of an oscillation loop of the AMP device according to the beat of a data stream, such that a parameter(s), such as the impedance of the AMP device, is changed accordingly, to implement a modulation process.

In some implementations, the AMP device 210 may include a power harvesting module, and the power harvesting module may be configured to harvest any signal from the environment. For example, the power harvesting module may be configured to harvest power from a power-supply signal transmitted by another device or from the environment. A form of the power-supply signal is not specifically limited in embodiments of the disclosure. For example, the power-supply signal may be a modulated radio signal, or may be an unmodulated radio signal. The carrier signal described above may also serve as a power-supply signal. For another example, the power-supply signal may be a radio signal of any waveform, such as a sine wave, a square wave, etc.

In some implementations, the AMP device 210 may be further provided with a logic processing unit to perform corresponding computing functions.

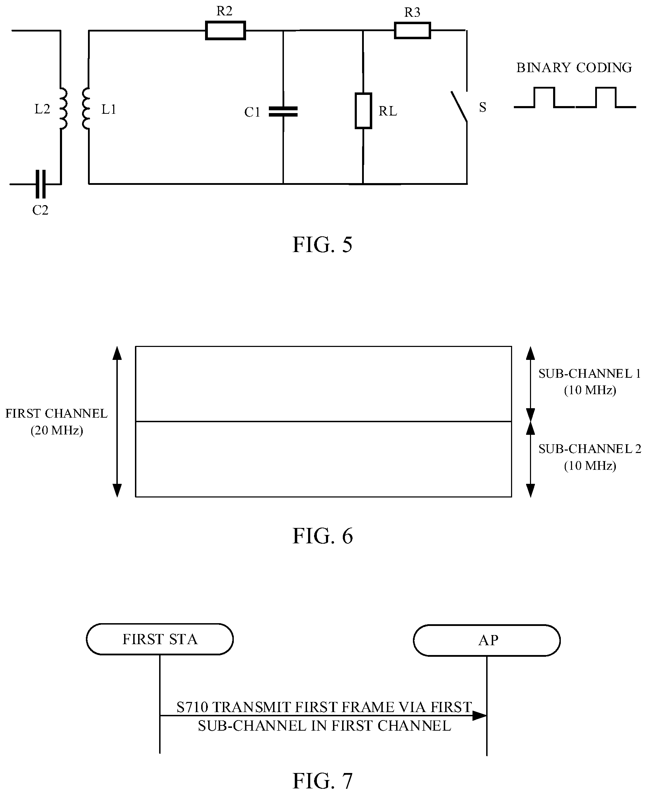

Generally, the load modulation function may be implemented in two manners: resistance-based load modulation and capacitor-based load modulation. FIG. 5 illustrates a circuit diagram of an AMP device based on a resistance-based load modulation technology. In the resistance-based load modulation, a resistor *RL* may be connected in parallel to a load. A switch S may control on/off of the resistor RL under control of a binary data stream. In this way, on/off of the resistor RL causes a change in a voltage of the circuit, and amplitude of a backscattered signal from the AMP device may be controlled by the change in the voltage of the circuit, to implement modulation of the backscattered signal, i.e., implement amplitude-shift keying (ASK) modulation on the backscattered signal.

Similarly, in capacitor-based load modulation, on/off of the capacitor may be controlled based on a binary data stream, to change a resonance frequency of a circuit, thereby changing an operating frequency of the backscattered signal. In this case, frequency-shift keying (FSK) modulation is implemented.

In a WiFi system, it is sometimes necessary to perform channel access for a large number of STAs in a very short time. For example, in a WiFi system, the density of AMP devices may be greater than that of legacy STAs. In application scenarios such as smart logistics, smart factories, etc., a few hundred or even a few thousand of AMP devices may be associated with the same AP. As such, the AP may be required to poll these AMP devices and perform massive channel access in a very short time. Therefore, how to improve channel capacity to support massive channel access for STAs is an issue to be addressed.

For the above issue, a channel splitting scheme is provided in embodiments of the disclosure. In the channel splitting scheme, a first channel is split into multiple sub-channels, such that an STA can operate on a sub-channel. In this way, one channel can accommodate or be accessed by more STAs simultaneously, thereby improving channel capacity.

The first channel mentioned in embodiments of the disclosure may refer to any predefined or preconfigured channel in a frequency band where the first channel is located. Taking 2.4 GHz as an example, the first channel may be a 20 MHz channel.

The splitting scheme for the first channel is not limited in embodiments of the disclosure. For example, the first channel may be split into multiple sub-channels using uniform channel splitting or differential channel splitting. FIG. 6 illustrates an example of a splitting scheme for the first channel. As illustrated in FIG. 6, the first channel is a channel in a 2.4 GHz frequency band, and a bandwidth of the first channel is 20 MHz. To enable the first channel to accommodate more STAs, the first channel can be split into two sub-channels, each with 10 MHz bandwidth. In this way, the number of STAs accessing the first channel at the same time can be doubled.

Embodiments of the disclosure are described in detail below from the perspective of communication between a first STA and an AP.

FIG. 7 is a schematic flowchart illustrating a method for wireless communication provided in embodiments of the disclosure. The method as illustrated in FIG. 7 is described from the perspective of an interaction between a first STA and an AP. The first STA may be an AMP device (correspondingly, the AP may be referred to as "AMP AP"). Alternatively, in some implementations, the first STA may be a legacy STA (e.g., a laptop or a tablet computer). That is, embodiments of the disclosure do not exclude the possibility that a legacy STA uses the solutions proposed in embodiments of the disclosure.

Reference may be made to FIG. 7, at S710, the first STA transmits a first frame via a first sub-channel in a first channel, where the first channel is any one of multiple sub-channels in the first channel. Taking the channel splitting scheme as illustrated in FIG. 6 as an example, the first sub-channel may be sub-channel 1 or sub-channel 2 in FIG. 6.

Taking the case where the first STA is an AMP device as an example, the first frame may be referred to as "AMP frame". In some implementations, the first frame may occupy the entire bandwidth of the first sub-channel. In some other implementations, the first frame may occupy a part of the bandwidth of the first sub-channel, to reduce the possibility of interference caused by transmission of the first frame to adjacent channels or sub-channels. For example, the first frame may occupy the middle frequency band of the first sub-channel. The first frame is transmitted in the middle frequency band of the first sub-channel, which can minimize interference from the first frame to adjacent channels on both sides of the first sub-channel.

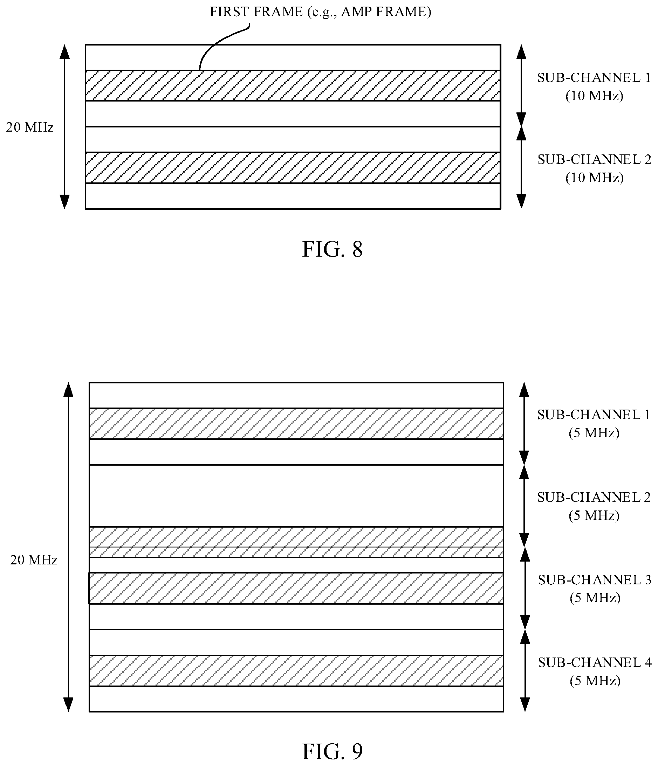

Exemplarily, reference may be made to FIG. 8, the bandwidth of the first channel is 20 MHz, and the first channel is uniformly split into two sub-channels, i.e., sub-channel 1 and sub-channel 2 in FIG. 8. Assuming that the first sub-channel is sub-channel 1 and a bandwidth of the first frame is 4 MHz, then the first frame can be arranged in the middle of a 10 MHz bandwidth in sub-channel 1.

To enable the first channel to accommodate more STAs, one possible manner is to split the first channel into more sub-channels. However, the number of sub-channels that the first channel can contain may be influenced by other factors. If the influence of other factors is not considered, the communication quality of the sub-channels in the first channel may not be guaranteed.

Therefore, in some implementations, the number of sub-channels in the first channel may be determined based on one or more of (associated with one or more of): a bandwidth of the first channel, a clock accuracy of the first STA, a bandwidth occupied by the first frame, a frequency shift of the first STA, or an operating frequency band of the first STA. For example, if a clock of the first STA can only achieve 1000 parts per million (ppm) accuracy, then the maximum frequency shift of the first STA is 2.4 MHz in each direction. If the bandwidth of the first sub-channel split from the first channel is too small, then the first frame transmitted by the first STA on the first sub-channel is likely to occupy frequency bands of adjacent sub-channels, thereby generating severe interference to the adjacent sub-channels.

Exemplarily, reference may be made to FIG. 9, the bandwidth of the first channel is 20 MHz, and the first channel is split into four sub-channels, each occupying 5MHz bandwidth. The bandwidth of the first frame is assumed to be 4 MHz. If the first STA does not experience frequency shift, then a frequency band occupied by the first frame is still within a frequency range of the first sub-channel, and thus severe adjacent channel interference will not be generated. However, if the clock inaccuracy of the first STA reaches 1000 ppm, then a 2.4 MHz frequency shift will be caused when the first STA operates at the 2.4 GHz frequency band. It is assumed that the 2.4 MHz frequency shift happens in sub-channel 2 in FIG. 9. Reference may be made to FIG. 9, a frequency band occupied by a frame transmitted on sub-channel 2 will overlap with a frequency band of sub-channel 3, thereby causing significant interference to channel transmission in sub-channel 3.

As can be seen from the above description, in determination of the splitting scheme for the first channel, considering a factor of the clock accuracy (frequency shift) of the first STA is conducive to reducing interference between adjacent sub-channels. For an STA with high clock accuracy, this factor might be ignored (or a weight of the clock accuracy may be set lower). However, for an STA with weaker capabilities (such as an AMP device), this factor is always important. An AMP device (e.g., a tag) is taken as an example. According to the description in the related literature (e.g., "IEEE 802.11-23/1140, Considerations for AMP Devices"), due to the very simple structure and ultra-low power consumption requirements of the AMP device, the clock accuracy of the AMP device is very low (correspondingly, the AMP device has a large frequency shift). For such a device, considering the clock accuracy (frequency shift) is conducive to preventing interference issues caused by frequency shift.

In some implementations, the number of sub-channels in the first channel may be determined based on the bandwidth of the first channel. For example, if the bandwidth of the first channel is relatively large, then the first channel may contain more sub-channels. If the bandwidth of the first channel is relatively small, then the first channel may contain fewer sub-channels.

In some implementations, the number of sub-channels in the first channel may be determined based on the bandwidth occupied by the first frame. For example, if the bandwidth occupied by the first frame is relatively small, then the first channel may contain more sub-channels. If the bandwidth occupied by the first frame is relatively large, then the first channel may contain fewer sub-channels.

It can be understood that, in determination of the number of sub-channels in the first channel, only one of the various factors mentioned above may be considered, or multiple factors may be considered, thereby making the determined number of sub-channels more reasonable. A specific example is given below.

The number of sub-channels in the first channel can be less than or equal to a first number, and the first number satisfies Equation (1) (or is determined based on Equation (1)): ${N}_{sub} = \left⌊{B}_{ch}/\left(2\left(\frac{B}{2}+{f}_{Δ}\right)\right)\right⌋$

In Equation (1), N_{sub} represents the first number, B_{ch} represents the bandwidth of the first channel, B represents the bandwidth occupied by the first frame, f_{Δ} represents the frequency shift (or the maximum frequency shift) of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$. For example, if B_{ch} is 20 MHz, B is 4 MHz, and f_{Δ} is 2.4 MHz, then a value of N_{sub} is 2.

As can be seen from the above equation, the number of first channels is limited to be less than or equal to the first number, such that the frequency band occupied by the first frame can still be within the range of the first sub-channel even if the first STA experiences a frequency shift, thereby avoiding severe interference to adjacent sub-channels.

There may be various channel splitting schemes for the first channel. For example, the channel splitting scheme for the first channel may be a fixed channel splitting scheme. That is, the number of sub-channels in the first channel may be a fixed value or determined based on preconfigured information. Exemplarily, the number of sub-channels in the first channel can be determined based on Equation (1) mentioned above. Then, the number of sub-channels in the first channel will not be changed during the entire life scale of an AP.

For another example, a dynamic or adaptive channel splitting scheme may be adopted for the first channel. That is, the number of sub-channels in the first channel may be configured dynamically or adaptively according to actual conditions. For example, when the number of non-AP STAs is relatively small, the first channel can be split into a smaller number of sub-channels. In this way, since each sub-channel in the first channel occupies a relatively large bandwidth, adjacent sub-channel interference will be less. On the contrary, when the number of non-AP STAs is relatively large, the first channel can be split into a larger number of sub-channels to accommodate more non-AP STAs.

In some implementations, if the dynamic or adaptive channel splitting scheme mentioned above is adopted, then the channel splitting may be initiated by the AP. For example, the AP can transmit first information (the first information may be carried in a broadcasting frame (e.g., a beacon frame)) to the first STA. The first information may indicate whether to split the first channel, and/or the first information may indicate a first parameter. The first parameter can indicate or be used for determining a splitting scheme for the first channel, and thus the first parameter may also be referred to as "channel splitting parameter". The first parameter may include, for example, one or more of: the number of sub-channels in the first channel, a central frequency of a sub-channel in the first channel, or a bandwidth occupied by a sub-channel in the first channel.

Further, in some implementations, after transmitting the first information, the AP can receive a second frame transmitted by the first STA, where the second frame indicates whether the first STA supports the splitting scheme for the first channel. Information contained in the second frame can be understood as confirmation information for the first information. The AP can request the confirmation information from an STA that has received the first information. After the second information is received, if the second information indicates that the first STA does not support the channel splitting scheme indicated in the first information, the AP can stop channel splitting, thereby ensuring the reliability of the communication process.

In some implementations, if the dynamic or adaptive channel splitting scheme mentioned above is adopted, then the channel splitting may be initiated by the first STA. For example, the first STA can transmit second information (which may be referred to as "channel splitting request information") to the AP. The second information may indicate whether to split the first channel, and/or the second information may indicate a first parameter. The first parameter can indicate or be used for determining a splitting scheme for the first channel, and thus the first parameter may also be referred to as "channel splitting parameter". The first parameter may include, for example, one or more of: the number of sub-channels in the first channel, a central frequency of a sub-channel in the first channel, or a bandwidth occupied by a sub-channel in the first channel. Exemplarily, if the first STA has not successfully accessed the channel after waiting for a very long time, then the first STA can consider that current capacity of the first channel is insufficient and more sub-channels are needed. In this case, the first STA can transmit the second information to the AP to request splitting of the first channel. From the perspective of the AP, if the AP receives such request information from many STAs, the AP can consider splitting the first channel, and determine the first parameter (the channel splitting parameter) or negotiate the first parameter with the first STA.

The first parameter (the channel splitting parameter) is mentioned above. In some implementations, the first parameter may be determined autonomously by the AP or the first STA. Alternatively, the first parameter may be determined through negotiation between the AP and the first STA. The negotiation of the first parameter may be triggered by the AP or the first STA, which is not specifically limited in embodiments of the disclosure. To facilitate the negotiation of the first parameter, in some implementations, the first STA can transmit third information to the AP, where the third information can be understood as capability information of the first STA. The third information can indicate a clock accuracy of the first STA and/or a frequency shift of the first STA. Obtainment of the third information helps the AP understand the actual situation of the first STA, thereby enabling the negotiated channel splitting parameter to be supported by the first STA.

In some implementations, the first channel may be one of multiple channels, and the multiple channels are arranged in a frequency division multiplexing (FDM) (or frequency division multiple access (FDMA)) manner. Multiple FDM channels are introduced into a communication system to accommodate more STAs.

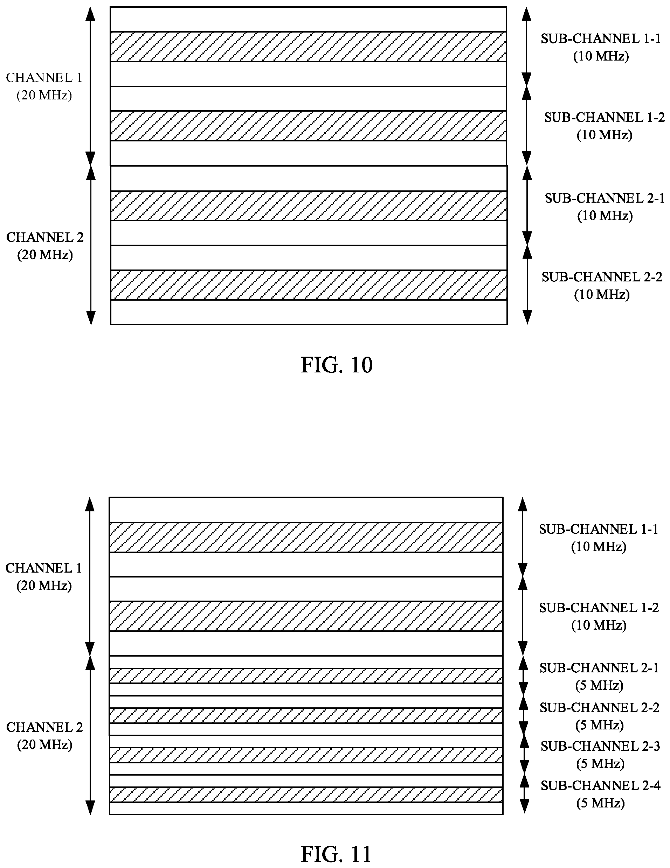

In some implementations, the multiple FDM channels may have the same channel splitting scheme. In other words, the multiple FDM channels may share the same channel splitting parameter (i.e., the first parameter mentioned above). For example, reference may be made to FIG. 10, channel 1 and channel 2 are two FDM channels, where channel 1 is split into sub-channel 1-1 and sub-channel 1-2, and channel 2 is split into sub-channel 2-1 and sub-channel 2-2. As can be seen from FIG. 10, channel 1 and channel 2 have the same channel splitting scheme. Using the same channel splitting scheme for multiple FDM channels can simplify the implementation complexity of the channel splitting scheme.

In some other embodiments, the multiple FDM channels may have respective channel splitting schemes. In other words, the multiple FDM channels may have respective channel splitting parameters (i.e., the first parameters mentioned above). In this implementation, the multiple FDM channels may have different channel splitting schemes. For example, reference may be made to FIG. 11, channel 1 and channel 2 are two FDM channels, where channel 1 is split into sub-channel 1-1 and sub-channel 1-2, and channel 2 is split into sub-channel 2-1, sub-channel 2-2, sub-channel 2-3, and sub-channel 2-4. Respective channel splitting schemes are designed for different channels, which can enhance the flexibility of channel splitting.

Exemplarily, the multiple FDM channels may include a first channel and second information, where the first channel is used for communication of a first type of STA, and the second channel is used for communication of a second type of STA. The first type of STA can refer to an STA with a relatively small frequency shift, and the second type of STA can refer to an STA with a relatively large frequency shift. Since the frequency shift of the first type of STA is smaller than that of the second type of STA, channel splitting schemes for the first channel and the second channel can be designed, such that the number of sub-channels in the first channel is greater than the number of sub-channels in the second channel. In this way, under the premise of effectively increasing the number of STAs that can be accommodated by each of the first channel and the second channel, interference generated between sub-channels in both the first channel and the second channel will also be relatively small, thereby making the overall channel splitting scheme better.

To enable the first STA (e.g., an STA supporting a channel splitting scheme) to co-exist with a legacy STA, a first preamble can be provided before the first frame (the first preamble can be consecutive to the first frame in a time domain), and a bandwidth occupied by the first preamble corresponds to a bandwidth of the first channel (e.g., the bandwidth occupied by the first preamble is equal to the bandwidth of the first channel). The first preamble may be referred to as "legacy preamble", i.e., a preamble that can be detected or identified by the legacy STA. That is, the legacy STA and the first STA can use the same preamble. The legacy preamble is arranged before the first frame, which can help the legacy STA yield to the transmission of the first STA, thereby enabling the first STA and the legacy STA to co-exist well in the same frequency band.

The first preamble may indicate that the first frame is transmitted after the first preamble. Alternatively, the first preamble may indicate that a time period subsequent to the first preamble is occupied by the first STA. Alternatively, the first preamble may indicate a splitting scheme for the first channel. After successfully detecting the first preamble, the legacy STA may enter an idle mode or a sleep mode and wait until the first channel is idle before attempting to access the first channel.

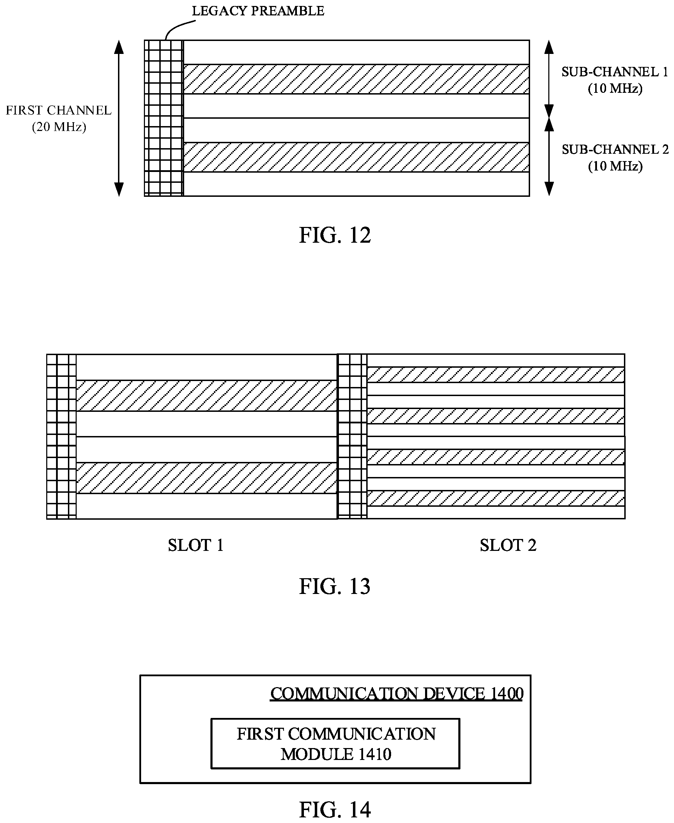

Exemplarily, reference may be made to FIG. 12, where the bandwidth of the first channel is 20 MHz, and the first channel is split into two sub-channels. Before the first frame is transmitted, the legacy preamble can be transmitted first. The legacy preamble occupies 20 MHz bandwidth, and the legacy preamble can indicate that a subsequent transmission period is occupied by the first STA. After successfully detecting the legacy preamble, the legacy STA can yield to transmission of the first STA.

In some implementations, channel splitting can be adaptively performed on the first channel in the time domain. For example, the first channel includes multiple time-domain positions (e.g., multiple slots) in a time domain, and the multiple time-domain positions have respective channel splitting schemes (or respective channel splitting parameters). The channel splitting schemes corresponding to the multiple time-domain positions may be the same or different. Exemplarily, reference may be made to FIG. 13, the first channel can contain slot 1 and slot 2 in the time domain. As can be seen from FIG. 13, in slot 1, the first channel includes two sub-channels, and in slot 2, the first channel includes four sub-channels.

Exemplarily, if an AP is associated with different types of STAs at different time-domain positions (or transmission occasions), the adaptive channel splitting scheme in the time domain mentioned above can be considered for channel splitting. For example, reference may be made to FIG. 13, assume that logistics tags are active and associated with the AP in slot 1, and sensors are active and associated with the AP in slot 2. Compared with the logistics tags, the sensors have relatively high complexity and a relatively strong capability. As such, compared with the logistics tags, the sensors have a relatively small frequency shift. In this case, in slot 1, the first channel can be split into a relatively small number of sub-channels, to avoid mutual interference between logistics tags. In slot 2, the first channel can be split into a relatively great number of sub-channels to accommodate more sensors.

In some implementations, the multiple time-domain positions may include a first time-domain position, and a channel splitting scheme for the first time-domain position is determined at a second time-domain position (the second time-domain position is located before the first time-domain position). That is, a channel splitting scheme corresponding to a certain time-domain position can be determined in advance, thereby leaving preparation time for the first STA to apply the channel splitting scheme (since the first STA may be a device with a relatively weak processing capability, such as an AMP device, and such a device may not be capable of applying a corresponding channel splitting parameter at the same time when the first time-domain position arrives). For example, the first STA can receive fourth information transmitted by the AP at the second time-domain position, where the fourth information indicates a channel splitting parameter (which may refer to the first parameter mentioned above) corresponding to the first time-domain position.

A time interval between the second time-domain position and the first time-domain position (e.g., the first time-domain position and the second time-domain position may refer to slots, and accordingly, the time interval may refer to a slot interval) may be determined based on one or more of the capability, timing accuracy, etc., of the first STA. The time interval can be set in various ways. For example, the time interval between the second time-domain position and the first time-domain position is a fixed value. For another example, the time interval between the second time-domain position and the first time-domain position is determined based on preconfigured information. For another example, the time interval between the second time-domain position and the first time-domain position is determined based on negotiation between the first STA and the AP. If the first STA and the AP negotiate to determine the time interval, then the first STA or the AP can request a peer device to confirm the negotiated time interval, to ensure the accuracy of the negotiated time interval.

In some implementations, the AP can access a third frame via the first channel. The third frame may be a frame transmitted by a second STA. The second STA may be a legacy STA (e.g., a laptop or a tablet computer). The third frame may occupy the entire bandwidth of the first channel.

In some implementations, the first frame and the third frame may use the same preamble.

Embodiments of the disclosure are described in more detail below with an example that the first STA is an AMP device. It can be noted that, the following examples are merely to help those skilled in the art understand embodiments of the disclosure, and are not intended to limit embodiments of the disclosure to the specific values or specific scenarios illustrated. It will be apparent to those skilled in the art that various equivalent modifications or variations can be made based on the example given below, and such modifications or variations also fall within the scope of embodiments of the disclosure.

In a WiFi system, the density of AMP devices may be greater than that of legacy STAs. For example, in application scenarios such as smart logistics, smart factories, etc., a few hundred or even a few thousand of AMP devices may be associated with the same AP. As such, the AP may be required to poll a large number of AMP devices in a very short time, and thus massive channel access is needed. Therefore, how to support a large number of AMP devices to access a channel simultaneously is an issue to be addressed in this example. Further, since the AMP device is relatively simple, the clock accuracy of the AMP device is relatively poor than that of a legacy WiFi device (e.g., a laptop or a tablet computer). In designing a channel access scheme for the AMP device, the disadvantage of a low clock accuracy of the AMP device can be taken into account to improve the robustness of the solution.

### Standalone Deployment

AMP devices can be used in both 2B and 2C cases. In 2C cases (e.g., smart home), AMP devices (e.g., temperature sensors) are normally co-existing with legacy WiFi devices (e.g., laptops or tablets) when operating at the same frequency. However, for 2B cases (e.g., logistics and smart factory), AMP devices can usually be deployed in an isolated area where no legacy WiFi devices operate in the same frequency band as AMP devices. In this example, the case where AMP devices operate independently is referred to as "standalone deployment". In such a case, channel access design for AMP devices does not need to consider the co-existence issue.

Since the AMP devices are expected to be extremely simple, and thus processing capability of the AMP devices is significantly restricted. Considering the device complexity increases with processing bandwidth, AMP devices can only handle a limited bandwidth. The current channel bandwidth at 2.4 GHz is 20 MHz, which is clearly beyond the processing capability of the AMP devices. In this regard, the current channel can be split to accommodate more AMP devices. As illustrated in FIG. 6, one 20 MHz channel is split into two sub-channels, each with 10 MHz bandwidth, and thus the number of AMP devices accessing the channel can be doubled.

In each sub-channel after channel splitting, an AMP frame (i.e., a frame transmitted by the AMP device) can occupy only a part of the entire bandwidth of each sub-channel. For example, the AMP frame can be placed in the middle of the sub-channel to reduce adjacent sub-channel interference. Exemplarily, reference may be made to FIG. 8, the bandwidth of the AMP frame can be assumed to be 4 MHz, and such a frame is placed in the middle of a 10 MHz bandwidth in each sub-channel.

In the example of FIG. 6, one channel is split into two sub-channels, each with 10 MHz bandwidth. To enable one channel to accommodate more AMP devices, a natural solution is to further split the channel into more sub-channels. For example, one channel can be split into *M* sub-channels, each with *B_{ch}*/*M* bandwidth, where *B_{ch}* represents a bandwidth of one channel, e.g., *B_{ch}*=20MHz in 2.4 GHz. However, such channel splitting is limited by many factors, and one of the most important factors is the clock accuracy of the AMP device. For example, if the clock accuracy of the AMP device can only achieve 1000 ppm accuracy, then the maximum frequency shift of the AMP device can be up to 2.4 MHz in each direction. In such a worst case, the AMP frame in a sub-channel can generate severe adjacent sub-channel interference.

As illustrated in FIG. 9, a 20 MHz channel is split into four sub-channels, each with 5 MHz bandwidth. A bandwidth occupied by the AMP frame is assumed to be 4 MHz. Without frequency shift, the bandwidth occupied by the AMP frame is still smaller than a bandwidth occupied by a sub-channel, and thus the AMP frame can be placed in the sub-channel without generating adjacent sub-channel interference significantly. However, the clock inaccuracy of the AMP device can be as bad as 1000 ppm in the worst case, which leads to 0.9 MHz and 2.4 MHz frequency inaccuracy when the AMP device operates at 900 MHz and 2.4 GHz, respectively. If the 2.4 MHz frequency shift happens in sub-channel 2, then the AMP frame in sub-channel 2 is shifted to overlap with sub-channel 3 and thus cause significant interference to the AMP device in sub-channel 3. In this regard, the maximum number of sub-channels after channel splitting is limited by Equation (2) below: ${N}_{sub} = \left⌊{B}_{ch}/\left(2\left(\frac{{B}_{AMP}}{2}+{f}_{Δ}\right)\right)\right⌋$ where B_{AMP} represents the bandwidth of the AMP frame, f_{Δ} represents the maximum frequency shift caused by the clock inaccuracy of the AMP device, B_{ch} represents the bandwidth of one channel, and N_{sub} represents the maximum number of sub-channels that one channel is split into. For example, for a frequency shift of 2.4 MHz and an AMP frame of 4 MHz, the maximum number of sub-channels that one channel can be split into is 2, such that no significant adjacent sub-channel interference is generated.

Two alternative channel splitting schemes are provided in this example, i.e., a fixed channel splitting scheme and an adaptive channel splitting scheme. In the fixed channel splitting scheme, the number of sub-channels in one channel is fixed or determined based on preconfigured information. The number of sub-channels in one channel can be determined based on Equation (2) and will not be changed during the entire life scale of an AMP AP. In the adaptive channel splitting scheme, the number of sub-channels in one channel can be adaptively configured. For example, when the number of non-AP AMP STAs associated with the AP is relatively small, the entire channel can be split into a relatively small number of sub-channels. In this case, a bandwidth of a sub-channel is relatively large, and adjacent channel interference is correspondingly less. On the contrary, when the number of non-AP AMP STAs associated with the AP is relatively large, the entire channel can be split into a relatively large number of sub-channels to accommodate more non-AP AMP STAs.

In the case of the adaptive channel splitting scheme, two alternative schemes are further provided according to different initiators of the channel splitting scheme in this example.

In scheme 1, the initiator of the channel splitting scheme is an AMP AP. That is, the AP determines whether and how to perform adaptive channel splitting. If the AP determines to perform channel splitting, then the AP can indicate a channel splitting parameter to the AMP device to indicate how the AMP device performs channel splitting. The channel splitting parameter may include, for example, one or more of the number of sub-channels in the channel, a central frequency of each sub-channel, or a bandwidth of each sub-channel. The channel splitting parameter may be sent via a beacon frame or another type of broadcasting frame. The AMP AP can request a confirmation from non-AP AMP STAs to indicate whether such a channel splitting scheme can be supported. If the non-AP AMP STAs indicate that such a channel splitting scheme cannot be supported, then the AMP AP stops channel splitting.

In scheme 2, the initiator of the channel splitting scheme is a non-AP AMP STA. That is, the non-AP AMP STA determines whether and how to perform adaptive channel splitting. If the non-AP AMP STA has waited for a very long time to access the channel, then from the perspective of the non-AP AMP STA, more channels are needed. In this case, the non-AP AMP STA can send a channel splitting request to an AMP AP. If the AMP AP receives such requests from many non-AP AMP STAs, then the AMP AP can start channel splitting and negotiate a channel splitting parameter with the non-AP AMP STAs.

In these two schemes, negotiation of the channel splitting parameter between the AMP AP and the non-AP AMP STAs may be needed. Such negotiation may be triggered by the AP or by the non-AP STAs. To facilitate such negotiation, non-AP AMP STAs, if possible, may need to report their own capability, e.g., clock inaccuracy, frequency shift, etc., to the associated AMP AP, and then the AP can determine the channel splitting parameter based on such report.

In some implementations, such a channel splitting scheme can be extended to FDMA. As illustrated in FIG. 10 or FIG. 11, two 20 MHz channels are FDMAed, and each channel is further split into more sub-channels internally.

The combination of the channel splitting scheme and FDMA can be done in different ways. For example, as illustrated in FIG. 10, the same channel splitting scheme may be adopted for each FDMAed channels. For another example, different channel splitting schemes may be adopted for each FDMAed channel, for example, as illustrated in FIG. 11, a first channel is split into two sub-channels, and a second channel is split into four sub-channels. The latter implementation offers relatively great flexibility. For example, if there are two types of non-AP AMP STAs associated with the same AMP AP, one type of non-AP AMP STAs has a relatively small frequency shift, and the other type of non-AP AMP STAs has a relatively large frequency shift, then the AMP AP can split the non-AP AMP STAs into two groups based on frequency shift and place these two groups into different channels. A channel with a group of the non-AP AMP STAs with a relatively small frequency shift can be split into more sub-channels, and the other channel with a group of the non-AP AMP STAs with a relatively large frequency shift can be split into fewer sub-channels, to eliminate interferences to adjacent sub-channels.

### Co-existence Deployment

As mentioned above, AMP devices can be applied in 2C cases, e.g., a smart home case, where the AMP devices co-exist with legacy WiFi devices when operating at the same frequency band. In this case, the design of the channel splitting scheme needs to take co-existence into account. Strictly speaking, co-existence can be interpreted as backward compatible where the legacy WiFi devices can understand the entire or at least partial AMP frame. Co-existence can also mean that the AMP devices have no or negligible impacts on the operation of the legacy devices.

Due to different waveforms, modulation schemes, etc., of the AMP devices and the legacy WiFi devices, it is inefficient to request the legacy WiFi devices to understand the entire AMP frame. Normally, a legacy preamble can be added before the AMP frame in a similar way to the WUR technology (the descriptions mentioned above). That is, as illustrated in FIG. 12, the AMP devices and the legacy WiFi devices may share a common preamble. As can be seen from FIG. 12, a legacy preamble with 20MHz bandwidth is followed by multiple AMP frames, and the channel splitting scheme only applies to the AMP frame part. Thus, the legacy WiFi devices can detect the preamble. If the preamble indicates the following part is for communication of AMP devices, then the legacy WiFi device may enter an idle mode or a sleep mode. All the schemes mentioned in standalone deployment, e.g., a fixed/adaptive channel splitting scheme, FDMA+channel splitting, etc., can be applied to co-existence deployment. In addition, as illustrated in FIG. 13, adaptive channel splitting can be performed in a time domain, and channel splitting parameters used in different time domains can be indicated in the legacy preamble. Reference may be made to FIG. 13, where different channel splitting schemes are applied in slot 1 and slot 2, respectively. Such schemes can be applied, for example, when different types of AMP devices are associated with the AMP AP. For example, during slot 1, logistic tags are active, and during slot 2, AMP sensors are active. Since AMP sensors are more complex than logistics tags, the frequency shift of AMP sensors is smaller than that of logistics tags. Therefore, slot 2 can be split into more sub-channels.

It can be noted that, the channel splitting parameter needs to be notified to the AMP device in advance since the AMP device has a relatively weak capability and may not be capable of applying the channel splitting parameter upon receiving the channel splitting parameter. For example, the channel splitting parameter can be indicated in slot *n,* and the time to apply the channel splitting parameter can be slot *n+m.* A value of *m* may be determined based on the capability, timing accuracy, etc., of the AMP device. The value of m may be a fixed value or a preconfigured value. Alternatively, the value of m may be determined based on negotiation between the AP and the AMP device. The negotiation may be initiated by the AP or by the AMP device. Whether the negotiation is initiated by the AP or the AMP device, the initiator can request a confirmation from the other device.

It can be noted that, the adaptive channel splitting scheme in the time domain can also be applied to the standalone deployment case.

As can be seen from the above, in this example, an issue of massive channel access by AMP devices at the same time is addressed. Meanwhile, in designing the solutions, this example considers the frequency shift caused by the clock inaccuracy of the AMP devices. Therefore, this example enables a channel to accommodate more AMP devices, thereby improving the efficiency of channel access.

The method embodiments of the disclosure are described in detail above with reference to FIG. 1 to FIG. 13, and the apparatus embodiments of the disclosure will be described in detail below with reference to FIG. 14 to FIG. 16. It may be understood that, illustrations of method embodiments and illustrations of apparatus embodiments correspond to each other, and therefore, for parts not described in detail, reference can be made to the foregoing method embodiments.

FIG. 14 is a schematic structural diagram of a communication device provided in an embodiment of the disclosure. The communication device 1400 as illustrated in FIG. 14 may be the first STA mentioned above. The communication device 1400 includes a first communication module 1410. The first communication module 1410 is configured to transmit a first frame via a first sub-channel in a first channel, where the first channel includes multiple sub-channels, and the first sub-channel is one of the multiple sub-channels.

In some implementations, a bandwidth of the first sub-channel is a first bandwidth, and the first frame occupies a part of the first bandwidth.

In some implementations, the part of the first bandwidth is located in a middle frequency band of the first bandwidth.

**In** some implementations, the number of sub-channels in the first channel is determined based on one or more of: a bandwidth of the first channel, a clock accuracy of the first STA, a bandwidth occupied by the first frame, or a frequency shift of the first STA.

**In** some implementations, the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋$, where N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

**In** some implementations, the number of sub-channels in the first channel is a fixed value or is determined based on preconfigured information.

**In** some implementations, the number of sub-channels in the first channel is determined dynamically.

**In** some implementations, the communication device 1400 further includes a second communication module. The second communication module is configured to receive first information transmitted by an AP, where the first information indicates one or more of: whether to split the first channel, or a first parameter used for determining a splitting scheme for the first channel.

**In** some implementations, the first information is carried in a broadcasting frame transmitted by the AP.

**In** some implementations, the communication device 1400 further includes a third communication module. The third communication module is configured to transmit a second frame to the AP, where the second frame indicates whether the first STA supports the splitting scheme for the first channel.

**In** some implementations, the communication device 1400 further includes a fourth communication module. The fourth communication module is configured to transmit second information to an AP, where the second information indicates one or more of: whether to split the first channel, or a first parameter used for determining a splitting scheme for the first channel.

**In** some implementations, the first parameter includes one or more of: the number of sub-channels in the first channel, a central frequency of a sub-channel in the first channel, or a bandwidth occupied by a sub-channel in the first channel.

In some implementations, the first parameter is determined based on negotiation between the first STA and the AP.

In some implementations, the negotiation of the first parameter is triggered by the first STA or triggered by the AP.

In some implementations, the communication device 1400 further includes a fifth communication module. The fifth communication module is configured to transmit third information to the AP, where the third information is used for determining the first parameter.

In some implementations, the third information indicates one or more of: a clock accuracy of the first STA, or a frequency shift of the first STA.

In some implementations, the first channel is one of multiple FDM channels, and the multiple channels have the same channel splitting scheme.

In some implementations, the first channel is one of multiple FDM channels, and the multiple channels have respective channel splitting schemes.

In some implementations, the multiple channels further include a second channel, where the first channel is used for communication of a first type of STA, the second channel is used for communication of a second type of STA, the number of sub-channels in the first channel is greater than the number of sub-channels in the second channel, and a frequency shift of the first type of STA is less than a frequency shift of the second type of STA.

In some implementations, a first preamble is arranged before the first frame, and a bandwidth occupied by the first preamble corresponds to a bandwidth of the first channel.

In some implementations, the first preamble indicates one or more of: a frame transmitted subsequent to the first preamble being the first frame, or a first parameter indicating a splitting scheme for the first channel.

In some implementations, the first channel includes multiple time-domain positions in a time domain, and the multiple time-domain positions have respective channel splitting schemes.

In some implementations, the multiple time-domain positions include a first time-domain position, where a channel splitting scheme for the first time-domain position is determined at a second time-domain position, and the second time-domain position is located before the first time-domain position.

In some implementations, a time interval between the second time-domain position and the first time-domain position is a fixed value, the time interval between the second time-domain position and the first time-domain position is determined based on preconfigured information, or the time interval between the second time-domain position and the first time-domain position is determined based on negotiation between the first STA and an AP.

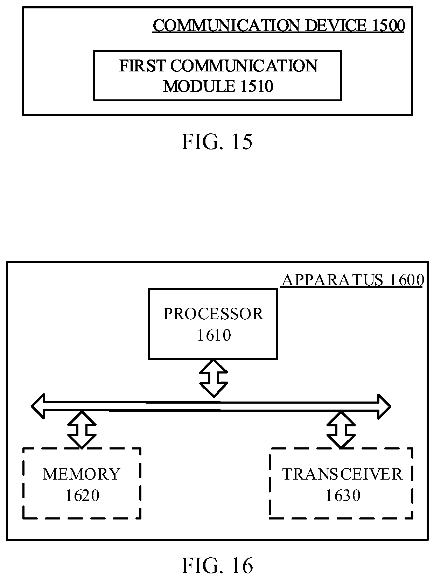

FIG. 15 is a schematic structural diagram of a communication device provided in an embodiment of the disclosure. The communication device 1500 as illustrated in FIG. 15 may be the AP mentioned above. The communication device 1500 includes a first communication module 1510. The first communication module 1510 is configured to receive a first frame transmitted by a first STA via a first sub-channel in a first channel, where the first channel includes multiple sub-channels, and the first sub-channel is one of the multiple sub-channels.

In some implementations, a bandwidth of the first sub-channel is a first bandwidth, and the first frame occupies a part of the first bandwidth.

In some implementations, the part of the first bandwidth is located in a middle frequency band of the first bandwidth.

In some implementations, the number of sub-channels in the first channel is determined based on one or more of: a bandwidth of the first channel, a clock accuracy of the first STA, a bandwidth occupied by the first frame, or a frequency shift of the first STA.

In some implementations, the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋$, where N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

In some implementations, the number of sub-channels in the first channel is a fixed value or is determined based on preconfigured information.

In some implementations, the number of sub-channels in the first channel is determined dynamically.

In some implementations, the communication device 1500 further includes a second communication module. The second communication module is configured to transmit first information to the first STA, where the first information indicates one or more of: whether to split the first channel, or a first parameter used for determining a splitting scheme for the first channel.

In some implementations, the first information is carried in a broadcasting frame transmitted by the AP.

In some implementations, the communication device 1500 further includes a third communication module. The third communication module is configured to receive a second frame transmitted by the first STA, where the second frame indicates whether the first STA supports the splitting scheme for the first channel.

In some implementations, the communication device 1500 further includes a fourth communication module. The fourth communication module is configured to receive second information transmitted by the first STA, where the second information indicates one or more of: whether to split the first channel, or a first parameter used for determining a splitting scheme for the first channel.

In some implementations, the first parameter includes one or more of: the number of sub-channels in the first channel, a central frequency of a sub-channel in the first channel, or a bandwidth occupied by a sub-channel in the first channel.

In some implementations, the first parameter is determined based on negotiation between the first STA and the AP.

In some implementations, the negotiation of the first parameter is triggered by the first STA or triggered by the AP.

In some implementations, the communication device 1500 further includes a fifth communication module. The fifth communication module is configured to receive third information transmitted by the first STA, where the third information is used for determining the first parameter.

In some implementations, the third information indicates one or more of: a clock accuracy of the first STA, or a frequency shift of the first STA.

In some implementations, the first channel is one of multiple FDM channels, and the multiple channels have the same channel splitting scheme.

In some implementations, the first channel is one of multiple FDM channels, and the multiple channels have respective channel splitting schemes.

In some implementations, the multiple channels further include a second channel, where the first channel is used for communication of a first type of STA, the second channel is used for communication of a second type of STA, the number of sub-channels in the first channel is greater than the number of sub-channels in the second channel, and a frequency shift of the first type of STA is less than a frequency shift of the second type of STA.

In some implementations, a first preamble is arranged before the first frame, and a bandwidth occupied by the first preamble corresponds to a bandwidth of the first channel.

In some implementations, the first preamble indicates one or more of: a frame transmitted subsequent to the first preamble being the first frame, or a first parameter indicating a splitting scheme for the first channel.

In some implementations, the first channel includes multiple time-domain positions in a time domain, and the multiple time-domain positions have respective channel splitting schemes.

In some implementations, the multiple time-domain positions include a first time-domain position, where a channel splitting scheme for the first time-domain position is determined at a second time-domain position, and the second time-domain position is located before the first time-domain position.

In some implementations, a time interval between the second time-domain position and the first time-domain position is a fixed value, the time interval between the second time-domain position and the first time-domain position is determined based on preconfigured information, or the time interval between the second time-domain position and the first time-domain position is determined based on negotiation between the first STA and an AP.

FIG. 16 is a schematic structural diagram of an apparatus for communication provided in embodiments of the disclosure. Dotted lines as illustrated in FIG. 16 indicate that a unit or a module is optional. The apparatus 1600 can be configured to implement the method described in the method embodiments. The apparatus 1600 may be a chip or a communication device.

The apparatus 1600 may include one or more processors 1610. The processor 1610 may support the apparatus 1600 to implement the method described in the method embodiments. The processor 1610 may be a general-purpose processor or a special-purpose processor. For example, the processor may be a central processing unit (CPU). Alternatively, the processor may also be another general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor, the processor may be any traditional processor, etc.

The apparatus 1600 may further include one or more memories 1620. The memory 1620 is configured to store a program which, when executed by the processor 1610, causes the processor 1610 to perform the method described in the method embodiments. The memory 1620 may be independent of the processor 1610 or may be integrated into the processor 1610.

The apparatus 1600 may further include a transceiver 1630. The processor 1610 may communicate with other devices or chips through the transceiver 1630. For example, the processor 1610 may send data to and receive data from other devices or chips through the transceiver 1630.

A computer-readable storage medium is further provided in embodiments of the disclosure. The computer-readable storage medium stores a program. The computer-readable storage medium is applicable to the communication device provided in embodiments of the disclosure. The program is operable with a computer to perform the method performed by the communication device in various embodiments of the disclosure.

A computer program product is further provided in embodiments of the disclosure. The computer program product includes a program. The computer program product is applicable to the communication device provided in embodiments of the disclosure. The program is operable with a computer to perform the method performed by the communication device in various embodiments of the disclosure.

A computer program is further provided in embodiments of the disclosure. The computer program is applicable to the terminal or the network device provided in embodiments of the disclosure. The computer program is operable with a computer to perform the method performed by the communication device in various embodiments of the disclosure.

It may be understood that, the terms "system" and "network" herein can be used interchangeably. In addition, the terms used in the disclosure are merely intended for explaining specific embodiments of the disclosure rather than limiting the disclosure. The terms "first", "second", "third", "fourth", etc., in the specification, the claims, and the accompanying drawings of the disclosure are used to distinguish different objects rather than describe a particular order.

In embodiments of the disclosure, "indication" mentioned may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In embodiments of the disclosure, "B corresponding to A" indicates that B is associated with A, and B may be determined according to A. However, it may be further understood that, "determine B according to A" does not mean that B is determined according to A only, and B may also be determined according to A and/or other information.

In embodiments of the disclosure, the term "correspondence" may mean that there is a direct or indirect correspondence between the two, may mean that there is an association between the two, may mean a relationship of indicating and indicated or configuring and configured, etc.

In embodiments of the disclosure, "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

It may be understood that, the term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

In embodiments of the disclosure, the term "include" or "comprise" may refer to direct inclusion or indirect inclusion. Optionally, the term "include" or "comprise" mentioned in embodiments of the disclosure may be replaced with "indicate" or "configured to determine". For example, A includes B, which may be replaced with that A indicates B, or that A is configured to determine B.

In various embodiments of the disclosure, the magnitude of a sequence number of each of the foregoing processes does not mean an execution order, and an execution order of each process may be determined according to a function and an internal logic of the process, which shall not constitute any limitation to an implementation process of embodiments of the disclosure.

In embodiments of the disclosure, the "protocol" may refer to a communication standard protocol, which may include, for example, an LTE protocol, an NR protocol, and a protocol applied to a future communication system, and the disclosure is not limited in this regard.

It will be appreciated that, the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of embodiments of the disclosure are performed. The computer may be a general-purpose computer, a special-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for wireless communication, comprising:
transmitting, by a first station (STA), a first frame via a first sub-channel in a first channel, wherein the first channel comprises a plurality of sub-channels, and the first sub-channel is one of the plurality of sub-channels.

2. The method of claim 1, wherein a bandwidth of the first sub-channel is a first bandwidth, and the first frame occupies a part of the first bandwidth.

3. The method of claim 2, wherein the part of the first bandwidth is located in a middle frequency band of the first bandwidth.

4. The method of any one of claims 1 to 3, wherein a number of sub-channels in the first channel is determined based on one or more of:
a bandwidth of the first channel;
a clock accuracy of the first STA;
a bandwidth occupied by the first frame; or
a frequency shift of the first STA.

5. The method of claim 4, wherein the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋$, wherein N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

6. The method of any one of claims 1 to 5, wherein a number of sub-channels in the first channel is a fixed value or is determined based on preconfigured information.

7. The method of any one of claims 1 to 5, wherein a number of sub-channels in the first channel is determined dynamically.

8. The method of any one of claims 1 to 5 and 7, further comprising:
receiving, by the first STA, first information transmitted by an access point (AP), wherein the first information indicates one or more of:
whether to split the first channel; or
a first parameter used for determining a splitting scheme for the first channel.

9. The method of claim 8, wherein the first information is carried in a broadcasting frame transmitted by the AP.

10. The method of claim 8 or 9, further comprising:
transmitting, by the first STA, a second frame to the AP, wherein the second frame indicates whether the first STA supports the splitting scheme for the first channel.

11. The method of any one of claims 1 to 5 and 7, further comprising:
transmitting, by the first STA, second information to an AP, wherein the second information indicates one or more of:
whether to split the first channel; or
a first parameter used for determining a splitting scheme for the first channel.

12. The method of any one of claims 8 to 11, wherein the first parameter comprises one or more of:
a number of sub-channels in the first channel;
a central frequency of a sub-channel in the first channel; or
a bandwidth occupied by a sub-channel in the first channel.

13. The method of any one of claims 8 to 12, wherein the first parameter is determined based on negotiation between the first STA and the AP.

14. The method of claim 13, wherein the negotiation of the first parameter is triggered by the first STA or triggered by the AP.

15. The method of any one of claims 8 to 14, further comprising:
transmitting, by the first STA, third information to the AP, wherein the third information is used for determining the first parameter.

16. The method of claim 15, wherein the third information indicates one or more of:
a clock accuracy of the first STA; or
a frequency shift of the first STA.

17. The method of any one of claims 1 to 16, wherein the first channel is one of a plurality of frequency division multiplexed (FDM) channels, and the plurality of channels have a same channel splitting scheme.

18. The method of any one of claims 1 to 16, wherein the first channel is one of a plurality of FDM channels, and the plurality of channels have respective channel splitting schemes.

19. The method of claim 18, wherein the plurality of channels further comprise a second channel, wherein the first channel is used for communication of a first type of STA, the second channel is used for communication of a second type of STA, a number of sub-channels in the first channel is greater than a number of sub-channels in the second channel, and a frequency shift of the first type of STA is less than a frequency shift of the second type of STA.

20. The method of any one of claims 1 to 19, wherein a first preamble is arranged before the first frame, and a bandwidth occupied by the first preamble corresponds to a bandwidth of the first channel.

21. The method of claim 20, wherein the first preamble indicates one or more of:
a frame transmitted subsequent to the first preamble being the first frame; or
a first parameter indicating a splitting scheme for the first channel.

22. The method of any one of claims 1 to 21, wherein the first channel comprises a plurality of time-domain positions in a time domain, and the plurality of time-domain positions have respective channel splitting schemes.

23. The method of claim 22, wherein the plurality of time-domain positions comprise a first time-domain position, wherein a channel splitting scheme for the first time-domain position is determined at a second time-domain position, and the second time-domain position is located before the first time-domain position.

24. The method of claim 23, wherein
a time interval between the second time-domain position and the first time-domain position is a fixed value;
the time interval between the second time-domain position and the first time-domain position is determined based on preconfigured information; or
the time interval between the second time-domain position and the first time-domain position is determined based on negotiation between the first STA and an AP.

25. A method for wireless communication, comprising:
receiving, by an access point (AP), a first frame transmitted by a first station (STA) via a first sub-channel in a first channel, wherein the first channel comprises a plurality of sub-channels, and the first sub-channel is one of the plurality of sub-channels.

26. The method of claim 25, wherein a bandwidth of the first sub-channel is a first bandwidth, and the first frame occupies a part of the first bandwidth.

27. The method of claim 26, wherein the part of the first bandwidth is located in a middle frequency band of the first bandwidth.

28. The method of any one of claims 25 to 27, wherein a number of sub-channels in the first channel is determined based on one or more of:
a bandwidth of the first channel;
a clock accuracy of the first STA;
a bandwidth occupied by the first frame; or
a frequency shift of the first STA.

29. The method of claim 28, wherein the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋ ,$ wherein N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

30. The method of any one of claims 25 to 29, wherein a number of sub-channels in the first channel is a fixed value or is determined based on preconfigured information.

31. The method of any one of claims 25 to 29, wherein a number of sub-channels in the first channel is determined dynamically.

32. The method of claim 31, further comprising:
transmitting, by the AP, first information to the first STA, wherein the first information indicates one or more of:
whether to split the first channel; or
a first parameter used for determining a splitting scheme for the first channel.

33. The method of claim 32, wherein the first information is carried in a broadcasting frame transmitted by the AP.

34. The method of claim 32 or 33, further comprising:
receiving, by the AP, a second frame transmitted by the first STA, wherein the second frame indicates whether the first STA supports the splitting scheme for the first channel.

35. The method of claim 31, further comprising:
receiving, by the AP, second information transmitted by the first STA, wherein the second information indicates one or more of:
whether to split the first channel; or
a first parameter used for determining a splitting scheme for the first channel.

36. The method of any one of claims 32 to 35, wherein the first parameter comprises one or more of:
a number of sub-channels in the first channel;
a central frequency of a sub-channel in the first channel; or
a bandwidth occupied by a sub-channel in the first channel.

37. The method of any one of claims 32 to 36, wherein the first parameter is determined based on negotiation between the first STA and the AP.

38. The method of claim 37, wherein the negotiation of the first parameter is triggered by the first STA or triggered by the AP.

39. The method of any one of claims 32 to 38, further comprising:
receiving, by the AP, third information transmitted by the first STA, wherein the third information is used for determining the first parameter.

40. The method of claim 39, wherein the third information indicates one or more of:
a clock accuracy of the first STA; or
a frequency shift of the first STA.

41. The method of any one of claims 25 to 40, wherein the first channel is one of a plurality of frequency division multiplexed (FDM) channels, and the plurality of channels have a same channel splitting scheme.

42. The method of any one of claims 25 to 40, wherein the first channel is one of a plurality of channels, and the plurality of channels have respective channel splitting schemes.

43. The method of claim 42, wherein the plurality of channels further comprise a second channel, wherein the first channel is used for communication of a first type of STA, the second channel is used for communication of a second type of STA, a number of sub-channels in the first channel is greater than a number of sub-channels in the second channel, and a frequency shift of the first type of STA is less than a frequency shift of the second type of STA.

44. The method of any one of claims 25 to 43, wherein a first preamble is arranged before the first frame, and a bandwidth occupied by the first preamble corresponds to a bandwidth of the first channel.

45. The method of claim 44, wherein the first preamble indicates one or more of:
a frame transmitted subsequent to the first preamble being the first frame; or
a first parameter indicating a splitting scheme for the first channel.

46. The method of any one of claims 25 to 45, wherein the first channel comprises a plurality of time-domain positions in a time domain, and the plurality of time-domain positions have respective channel splitting schemes.

47. The method of claim 46, wherein the plurality of time-domain positions comprise a first time-domain position, wherein a channel splitting scheme for the first time-domain position is determined at a second time-domain position, and the second time-domain position is located before the first time-domain position.

48. The method of claim 47, wherein
a time interval between the second time-domain position and the first time-domain position is a fixed value;
the time interval between the second time-domain position and the first time-domain position is determined based on preconfigured information; or
the time interval between the second time-domain position and the first time-domain position is determined based on negotiation between the first STA and the AP.

49. A communication device, being a first station (STA) and comprising:
a first communication module configured to transmit a first frame via a first sub-channel in a first channel, wherein the first channel comprises a plurality of sub-channels, and the first sub-channel is one of the plurality of sub-channels.

50. The communication device of claim 49, wherein a bandwidth of the first sub-channel is a first bandwidth, and the first frame occupies a part of the first bandwidth.

51. The communication device of claim 50, wherein the part of the first bandwidth is located in a middle frequency band of the first bandwidth.

52. The communication device of any one of claims 49 to 51, wherein a number of sub-channels in the first channel is determined based on one or more of:
a bandwidth of the first channel;
a clock accuracy of the first STA;
a bandwidth occupied by the first frame; or
a frequency shift of the first STA.

53. The communication device of claim 52, wherein the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋ ,$ wherein N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

54. The communication device of any one of claims 49 to 53, wherein a number of sub-channels in the first channel is a fixed value or is determined based on preconfigured information.

55. The communication device of any one of claims 49 to 53, wherein a number of sub-channels in the first channel is determined dynamically.

56. The communication device of any one of claims 49 to 53 and 55, further comprising:
a second communication module configured to receive first information transmitted by an access point (AP), wherein the first information indicates one or more of:
whether to split the first channel; or
a first parameter used for determining a splitting scheme for the first channel.

57. The communication device of claim 56, wherein the first information is carried in a broadcasting frame transmitted by the AP.

58. The communication device of claim 56 or 57, further comprising:
a third communication module configured to transmit a second frame to the AP, wherein the second frame indicates whether the first STA supports the splitting scheme for the first channel.

59. The communication device of any one of claims 49 to 53 and 55, further comprising:
a fourth communication module configured to transmit second information to an AP, wherein the second information indicates one or more of:
whether to split the first channel; or
a first parameter used for determining a splitting scheme for the first channel.

60. The communication device of any one of claims 56 to 59, wherein the first parameter comprises one or more of:
a number of sub-channels in the first channel;
a central frequency of a sub-channel in the first channel; or
a bandwidth occupied by a sub-channel in the first channel.

61. The communication device of any one of claims 56 to 60, wherein the first parameter is determined based on negotiation between the first STA and the AP.

62. The communication device of claim 61, wherein the negotiation of the first parameter is triggered by the first STA or triggered by the AP.

63. The communication device of any one of claims 56 to 62, further comprising:
a fifth communication module configured to transmit third information to the AP, wherein the third information is used for determining the first parameter.

64. The communication device of claim 63, wherein the third information indicates one or more of:
a clock accuracy of the first STA; or
a frequency shift of the first STA.

65. The communication device of any one of claims 49 to 64, wherein the first channel is one of a plurality of frequency division multiplexed (FDM) channels, and the plurality of channels have a same channel splitting scheme.

66. The communication device of any one of claims 49 to 64, wherein the first channel is one of a plurality of FDM channels, and the plurality of channels have respective channel splitting schemes.

67. The communication device of claim 66, wherein the plurality of channels further comprise a second channel, wherein the first channel is used for communication of a first type of STA, the second channel is used for communication of a second type of STA, a number of sub-channels in the first channel is greater than a number of sub-channels in the second channel, and a frequency shift of the first type of STA is less than a frequency shift of the second type of STA.

68. The communication device of any one of claims 49 to 67, wherein a first preamble is arranged before the first frame, and a bandwidth occupied by the first preamble corresponds to a bandwidth of the first channel.

69. The communication device of claim 68, wherein the first preamble indicates one or more of:
a frame transmitted subsequent to the first preamble being the first frame; or
a first parameter indicating a splitting scheme for the first channel.

70. The communication device of any one of claims 49 to 69, wherein the first channel comprises a plurality of time-domain positions in a time domain, and the plurality of time-domain positions have respective channel splitting schemes.

71. The communication device of claim 70, wherein the plurality of time-domain positions comprise a first time-domain position, wherein a channel splitting scheme for the first time-domain position is determined at a second time-domain position, and the second time-domain position is located before the first time-domain position.

72. The communication device of claim 71, wherein
a time interval between the second time-domain position and the first time-domain position is a fixed value;
the time interval between the second time-domain position and the first time-domain position is determined based on preconfigured information; or
the time interval between the second time-domain position and the first time-domain position is determined based on negotiation between the first STA and an AP.

73. A communication device, being an access point (AP) and comprising:
a first communication module configured to receive a first frame transmitted by a first station (STA) via a first sub-channel in a first channel, wherein the first channel comprises a plurality of sub-channels, and the first sub-channel is one of the plurality of sub-channels.

74. The communication device of claim 73, wherein a bandwidth of the first sub-channel is a first bandwidth, and the first frame occupies a part of the first bandwidth.

75. The communication device of claim 74, wherein the part of the first bandwidth is located in a middle frequency band of the first bandwidth.

76. The communication device of any one of claims 73 to 75, wherein a number of sub-channels in the first channel is determined based on one or more of:
a bandwidth of the first channel;
a clock accuracy of the first STA;
a bandwidth occupied by the first frame; or
a frequency shift of the first STA.

77. The communication device of claim 76, wherein the number of sub-channels in the first channel is less than or equal to a first number, and the first number satisfies: ${N}_{sub} = \left⌊{B}_{ch}/\left(2\left(\frac{B}{2}+{f}_{Δ}\right)\right)\right⌋ ,$ wherein N_{sub} represents the first number, B_{ch} represents the bandwidth of the first channel, B represents the bandwidth occupied by the first frame, f_{Δ} represents the frequency shift of the first STA, and $\left⌊{B}_{ch}/\left(2\left(\frac{B}{2}+{f}_{Δ}\right)\right)\right⌋$ represents applying a floor function to ${B}_{ch} / \left(2\left(\frac{B}{2}+{f}_{Δ}\right)\right)$.

78. The communication device of any one of claims 73 to 77, wherein a number of sub-channels in the first channel is a fixed value or is determined based on preconfigured information.

79. The communication device of any one of claims 73 to 77, wherein a number of sub-channels in the first channel is determined dynamically.

80. The communication device of claim 79, further comprising:
a second communication module configured to transmit first information to the first STA, wherein the first information indicates one or more of:
whether to split the first channel; or
a first parameter used for determining a splitting scheme for the first channel.

81. The communication device of claim 80, wherein the first information is carried in a broadcasting frame transmitted by the AP.

82. The communication device of claim 80 or 81, further comprising:
a third communication module configured to receive a second frame transmitted by the first STA, wherein the second frame indicates whether the first STA supports the splitting scheme for the first channel.

83. The communication device of claim 79, further comprising:
a fourth communication module configured to receive second information transmitted by the first STA, wherein the second information indicates one or more of:
whether to split the first channel; or
a first parameter used for determining a splitting scheme for the first channel.

84. The communication device of any one of claims 80 to 83, wherein the first parameter comprises one or more of:
a number of sub-channels in the first channel;
a central frequency of a sub-channel in the first channel; or
a bandwidth occupied by a sub-channel in the first channel.

85. The communication device of any one of claims 80 to 84, wherein the first parameter is determined based on negotiation between the first STA and the AP.

86. The communication device of claim 85, wherein the negotiation of the first parameter is triggered by the first STA or triggered by the AP.

87. The communication device of any one of claims 80 to 86, further comprising:
a fifth communication module configured to receive third information transmitted by the first STA, wherein the third information is used for determining the first parameter.

88. The communication device of claim 87, wherein the third information indicates one or more of:
a clock accuracy of the first STA; or
a frequency shift of the first STA.

89. The communication device of any one of claims 73 to 88, wherein the first channel is one of a plurality of frequency division multiplexed (FDM) channels, and the plurality of channels have a same channel splitting scheme.

90. The communication device of any one of claims 73 to 88, wherein the first channel is one of a plurality of FDM channels, and the plurality of channels have respective channel splitting schemes.

91. The communication device of claim 90, wherein the plurality of channels further comprise a second channel, wherein the first channel is used for communication of a first type of STA, the second channel is used for communication of a second type of STA, a number of sub-channels in the first channel is greater than a number of sub-channels in the second channel, and a frequency shift of the first type of STA is less than a frequency shift of the second type of STA.

92. The communication device of any one of claims 73 to 91, wherein a first preamble is arranged before the first frame, and a bandwidth occupied by the first preamble corresponds to a bandwidth of the first channel.

93. The communication device of claim 92, wherein the first preamble indicates one or more of:
a frame transmitted subsequent to the first preamble being the first frame; or
a first parameter indicating a splitting scheme for the first channel.

94. The communication device of any one of claims 73 to 93, wherein the first channel comprises a plurality of time-domain positions in a time domain, and the plurality of time-domain positions have respective channel splitting schemes.

95. The communication device of claim 94, wherein the plurality of time-domain positions comprise a first time-domain position, wherein a channel splitting scheme for the first time-domain position is determined at a second time-domain position, and the second time-domain position is located before the first time-domain position.

96. The communication device of claim 95, wherein
a time interval between the second time-domain position and the first time-domain position is a fixed value;
the time interval between the second time-domain position and the first time-domain position is determined based on preconfigured information; or
the time interval between the second time-domain position and the first time-domain position is determined based on negotiation between the first STA and the AP.

97. A communication device, comprising:
a memory configured to store a program; and
a processor configured to invoke the program stored in the memory, to cause the communication device to perform the method of any one of claims 1 to 24 or 25 to 48.

98. An apparatus, comprising:
a processor configured to invoke a program stored in a memory, to cause the apparatus to perform the method of any one of claims 1 to 24 or 25 to 48.

99. A chip, comprising:
a processor configured to invoke a program stored in a memory, to cause a device equipped with the chip to perform the method of any one of claims 1 to 24 or 25 to 48.

100. A computer-readable storage medium storing a program operable with a computer to perform the method of any one of claims 1 to 24 or 25 to 48.

101. A computer program product comprising a program operable with a computer to perform the method of any one of claims 1 to 24 or 25 to 48.

102. A computer program operable with a computer to perform the method of any one of claims 1 to 24 or 25 to 48.
